# EUROPÄISCHE PATENTANMELDUNG

(11) **EP 1 321 263 A2**
(43) Veröffentlichungstag der Anmeldung: **25.06.2003**
(21) Anmeldenummer: 02406088.1
(22) Anmeldetag: 11.12.2002
(51) Int. Cl.: B28D 1/04, B23D 47/02

(54) **Sägevorrichtung mit einer Bremsvorrichtung**

(30) Priorität: 21.12.2001 DE 10163172
(71) Anmelder: HILTI Aktiengesellschaft, 9494 Schaan (LI)
(72) Erfinder: Plunger, Bernhard, 6780 St. Anton im Montafon (AT)
(74) Vertreter: Wildi, Roland

(57) **Zusammenfassung**

Eine Sägevorrichtung zum Schneiden von harten Materialien wie Beton oder Gestein, weist eine, an einem zu bearbeitenden Untergrund festlegbare, längliche Führungsschiene (1) und einen entlang der Führungsschiene (1) versetzbaren Schlitten (2) mit einer Sägeeinheit auf. Ferner weist die Sägevorrichtung ein Führungsmittel (4) auf, das den Schlitten (2) quer zur Längsrichtung (L) der Führungsschiene (1) führt. Eine automatische Bremseinrichtung (5) gewährleistet, dass der Schlitten (2) mit der Sägeeinheit sich innerhalb eines durch zumindest einer Stoppposition (25) definierten Arbeitsbereichs bewegt.

## Beschreibung

Die Erfindung betrifft eine Sägevorrichtung zum Schneiden von harten Materialien, wie Beton, Gestein oder dergleichen, mit einer an einem zu bearbeitenden Untergrund festlegbaren, länglichen mit einer Profilierung versehenen Führungsschiene, einem in Längsrichtung der Führungsschiene versetzbaren Schlitten und einer am Schlitten angeordneten Sägeeinheit.

Zum Schneiden von harten Materialien wie Beton, Mauerwerk oder dergleichen, ist eine Säge der Fa. DEMCO TECHNIC AG mit der Typenbezeichnung "Piranha" bekannt, die eine Führungsschiene, einen Schlitten und eine Sägeeinheit aufweist. Die Führungsschiene ist an einem zu bearbeitenden Untergrund mit geeigneten Befestigungselementen festlegbar. An der Führungsschiene ist ein Schlitten befestigt, der in Längsrichtung entlang der Führungsschiene versetzbar ist. Der Schlitten weist beispielsweise einen plattenförmigen Grundkörper und vier an einer ersten Seite des Grundkörpers angeordnete Führungsmittel, beispielsweise Führungsrollen, auf, die sich beispielsweise seitlich an der Führungsschiene abstützen.

Allgemein bekannt sind Wandsägen mit einer, mittels eines Schlittens entlang einer Führungsschiene geführten Sägeeinheit, deren Arbeitsbereich entlang der Führungsschiene mittels auf der Führungsschiene manuell befestigbaren Stoppmitteln festlegbar ist. Um ein Verschieben der Stoppmittel in Längsrichtung der Führungsschiene zu verhindern, weist die Führungsschiene eine Profilierung auf, mit der das Stoppmittel in Eingriff bringbar ist. Insbesondere dienen die Stoppmittel dazu, ein Versetzen des Schlittens entlang der Führungsschiene innerhalb einem, durch zumindest eine Stoppposition definierten Arbeitsbereich zu gewährleisten.

Nachteilig an der bekannten Lösung ist, dass die Stoppelemente manuell durch einen Anwender der Sägevorrichtung an der Führungsschiene zu befestigen sind.

Ferner ist es nachteilig, dass die Befestigung der Stoppelemente äusserst zeitaufwändig und wenig präzise ist.

Der vorliegenden Erfindung liegt die Aufgabe zugrunde, eine auf einer Führungsschiene geführten Sägevorrichtung zu schaffen, die eine handliche und präzise Festlegung eines Arbeitsbereiches für die Sägevorrichtung sicherstellt.

Erfindungsgemäss wird die Aufgabe dadurch gelöst, dass der Schlitten eine Bremseinrichtung aufweist, die an zumindest einer Stoppposition entlang der Führungsschiene eine Bewegung des Schlittens gegenüber der Führungsschiene, zumindest in eine Arbeitsrichtung, verhindert.

Dadurch, dass die erfindungsgemässe Sägevorrichtung am Schlitten die Bremsvorrichtung aufweist, erübrigt es sich für einen Anwender beispielsweise separate Stoppelemente mitzuführen. Der Schlitten mit der Sägeeinheit wird durch die Bremsvorrichtung automatisch an der nächstliegenden Stoppposition in der Arbeitsrichtung gestoppt. Ausserdem ist es beispielsweise möglich durch ein Freigabemittel nach einer Freigabe, ohne einen aufwändigen manuellen Eingriff, beispielsweise ein manuelles Entfernen der Stoppposition durch den Anwender, den Sägevorgang in die Arbeitsrichtung fortzusetzen.

Vorzugsweise ist in einer Stoppposition die Bremseinrichtung mit der Führungsschiene in Verbindung bringbar, um eine Relativbewegung zwischen der Führungsschiene und dem Schlitten zu verhindern. Das direkte Zusammenwirken der Bremseinrichtung mit der Führungsschiene ermöglicht eine einfache Ausbildung der Bremseinrichtung. Selbstverständliche wäre auch ein indirektes Zusammenwirken der beiden Teile denkbar, jedoch ist der konstruktive Aufwand höher und steht daher einer wirtschaftlichen Umsetzung der Sägevorrichtung entgegen.

Um eine effiziente und ohne eine grosse Zeitverzögerung durchführbare Arretierung zu gewährleisten, ist in einer Stoppposition die Bremseinrichtung mit der Profilierung der Führungsschiene in Eingriff bringbar. Damit ist die Führungsschiene und der Schlitten in dieser Stoppposition durch eine formschlüssige Verbindung miteinander verbunden. Gegenüber beispielweise einer reibschlüssigen Verbindung weist diese Ausführung den Vorteil auf, dass keine grosse Abnützung der Bremseinrichtung erfolgt und dadurch eine hohe Standzeit der Bremseinrichtung sichergestellt ist.

Die Bremseinrichtung ist vorteilhafterweise zur Verbindung mit der Führungsschiene mittels einer Steuereinheit betätigbar. Die vorzugsweise mechanisch betätigbare Steuereinheit stellt eine robust und wirtschaftlich herstellbare Steuerung sicher.

In einer weiteren Ausführungsform ist die Steuereinheit vorteilhafterweise elektronisch betätigbar, um auch komplexe Regelmechanismen mit der Steuereinheit auszuführen. Ferner erleichtert eine elektronische Steuereinheit beispielsweise auch den Einsatz eines Rechensystems und somit die Steuerung durch Daten.

Vorzugsweise weist die Steuereinheit zu deren Betätigung eine, mit der Führungsschiene zusammenwirkende Führungsfläche auf, um eine wirtschaftliche Herstellung sicherzustellen.

Vorteilhafterweise weist die Bremseinrichtung die Führungsfläche und zumindest einen, mit der Profilierung in Eingriff bringbaren, Rastvorsprung auf.

Vorzugsweise ist zumindest am arbeitsrichtungsseitigen Längsende der Führungsschiene eine Stoppposition angeordnet, um nur ein Versetzen des Schlittens gegenüber der Führungsschiene innerhalb eines Arbeitsbereiches sicherzustellen, in dem der Schlitten durch die Führungsschiene geführt ist.

Vorteilhafterweise ist an beiden Längsenden der Führungsschiene jeweils eine Stoppposition angeordnet, um auch bei einem Wechsel der Arbeitsrichtung der Sägevorrichtung ein Versetzen derselben nur im Arbeitsbereich sicherzustellen.

Die Erfindung wird nachstehend anhand eines Ausführungsbeispieles näher erläutert. Es zeigen:
- Fig. 1: eine Teilansicht der erfindungsgemässen Sägevorrichtung ohne Sägeeinheit in der Freigabeposition;
- Fig. 2: einen Teil-Querschnitt der in Fig. 1 dargestellten Sägevorrichtung;
- Fig. 3: eine Teilansicht der erfindungsgemässen Sägevorrichtung ohne Sägeeinheit in der Arretierposition;
- Fig. 4: einen Teil-Querschnitt der in Fig. 3 dargestellten Sägevorrichtung;

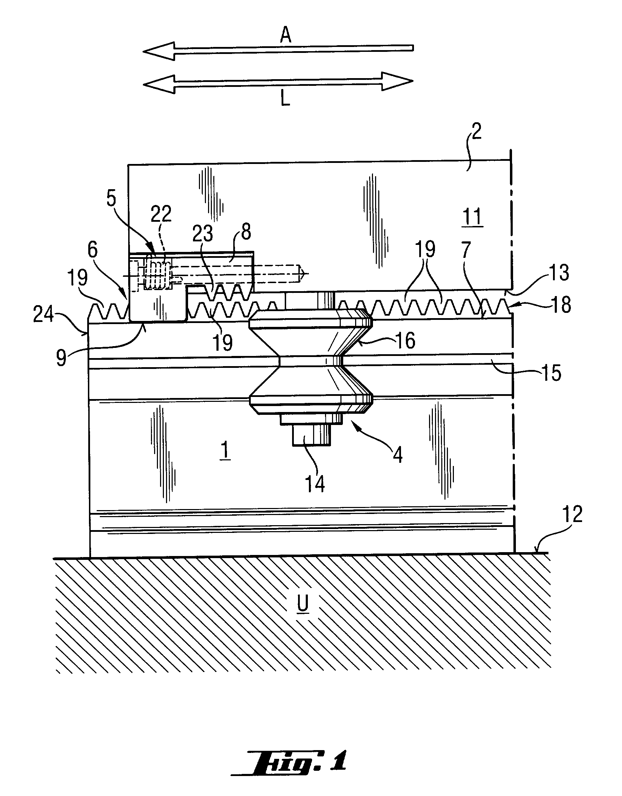

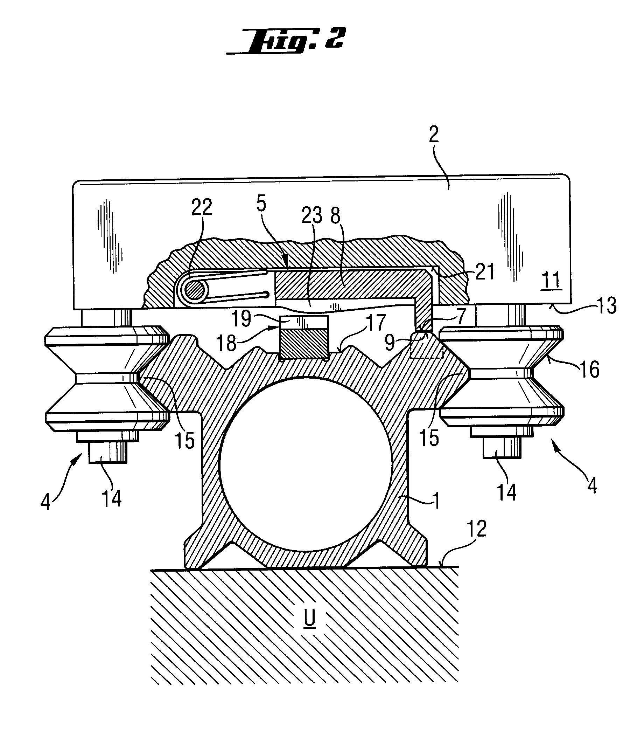

In den Fig. 1 bis 4 ist eine Sägevorrichtung mit einer an einem zu bearbeitenden Untergrund U festlegbaren, länglichen Führungsschiene 1, einem in Längsrichtung L der Führungsschiene 1 versetzbaren Schlitten 2 dargestellt. Am Schlitten 2 ist eine nicht dargestellte Sägeeinheit und ein Führungsmittel 4, das den Schlitten 2 in Längsrichtung L der Führungsschiene 1 führt, angeordnet.

Der Schlitten 2 weist eine Grundplatte 11, die etwa parallel zur Oberfläche 12 des Untergrundes U verläuft, auf. An einer der Führungsschiene 1 zugewandten, im wesentlichen rechteckförmigen Grundseite 13, weist der Schlitten 2 in jedem Eckbereich jeweils ein sich quer zur Grundseite 13 in Richtung der Führungsschiene 1 erstreckendes Halterungselement 14 auf, an dem jeweils ein Führungsmittel 4 um die Längsachse des korrespondierenden, bolzenförmig ausgebildeten Halterungselements 14 drehbar gelagert ist. Das Führungsmittel 4 kann beispielsweise als Rolle ausgeführt sein.

Die Führungsschiene 1 ist als Hohlprofilelement mit einem im wesentlichen quadratischen Querschnitt ausgebildet und weist zwei in Längsrichtung L der Führungsschiene 1 verlaufende jeweils mit den zwei korrespondierenden Führungsmitteln 4 zusammenwirkende Führungsstege 15 auf. Die Führungsstege 15 weisen einen im wesentlichen dreieckförmigen Querschnitt auf, der komplementär zur umlaufenden Nut 16 am Führungsmittel 4 ausgebildet ist. An der, der Grundplatte 11 zugewandten, Seite 17 weist die Führungsschiene 1 eine etwa mittig verlaufende Profilierung 18 auf, deren Ausnehmungen 19 der Grundplatte 11 zugewandt sind.

Eine am Schlitten angeordnete, automatische Bremseinrichtung 5, die an zumindest einer Stoppposition entlang der Führungsschiene 1 eine Bewegung des Schlittens 2 gegenüber der Führungsschiene 2, zumindest in eine Arbeitsrichtung A der Sägevorrichtung, verhindert, weist eine insgesamt mit 6 bezeichnete Steuereinheit auf. Die Steuereinheit 6 weist eine entlang der Führungsschiene 1 angeordnete Steuerkurve 7 und ein verschwenkbar am Schlitten 2 angeordneten Rasthebel 8 auf. Der Rasthebel 8 und die an einem Führungssteg 15 angeordnete und der Grundplatte 11 zugewandte Steuerkurve 7 stehen durch eine, am Rasthebel 8 angeordnete, Führungsfläche 9 in Kontakt.

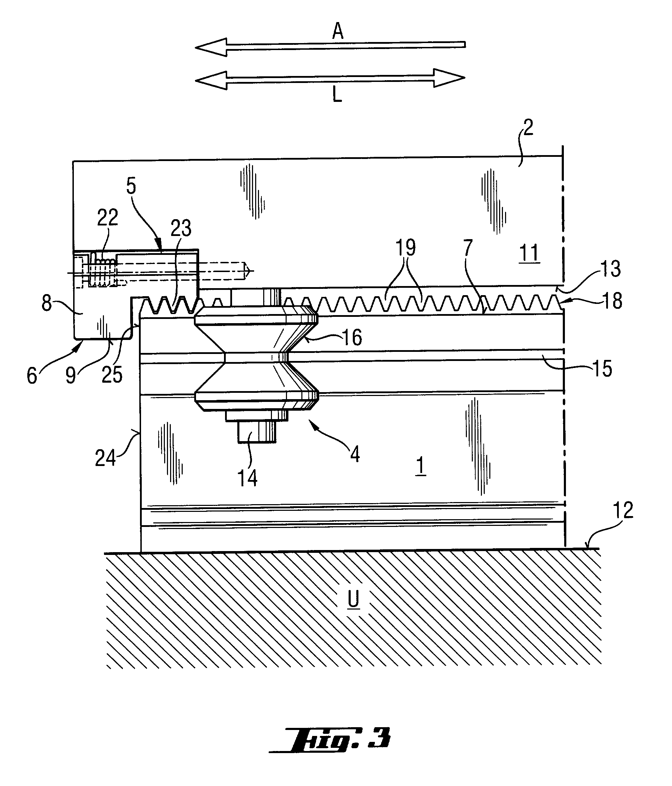

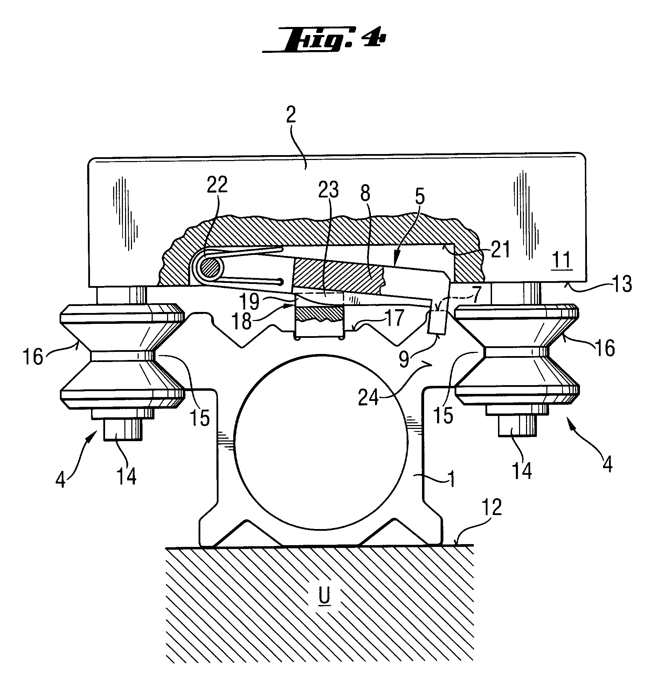

Der Rasthebel 8 weist einen im wesentlichen L-förmigen Längsschnitt auf und ist in einer, an der Grundplatte 11 angeordneten, Ausnehmung 21 an seinem längeren, freien Ende verschwenkbar gelagert. Der Rasthebel 8 ist durch eine Torsionsfeder 22 zur Führungsschiene 1 hin vorgespannt. Ferner weist der Rasthebel 8 ein in der, in Fig. 3 und 4 dargestellten, Arretierposition mit Ausnehmungen 19 der Profilierung 18 mehrere, zumindest teilweise in Eingriff bringbare Rastvorsprünge 23 auf.

Im Betrieb der erfindungsgemässen Sägevorrichtung wird die eine Bremsausnehmung 24 aufweisende Steuerkurve 7 positioniert, das heisst die Bremsausnehmung 24 an eine Stoppposition 25 positioniert. Die Sägeeinheit wird beispielsweise motorisch angetrieben auf der Führungsschiene 1 entlang der Längsrichtung L auf dem Schlitten 2 in eine Arbeitsrichtung A bewegt. An der Stoppposition gleitet der durch die Führungsfläche 9 auf der Steuerkurve 7 geführte Rasthebel 8 in die Bremsausnehmung 24. Durch diese, durch die Torsionsfeder 22 erzwungene, Schwenkbewegung des Rasthebels 8 wird die Gegenverzahnung 23 des Rasthebels 8 in Eingriff mit Ausnehmungen 19 der Profilierung 18 gebracht. Die Bremseinrichtung 5 befindet sich nun in der Arretierposition, die insbesondere in Fig. 3 und 4 dargestellt ist. In der dargestellten Ausführungsform wird die Bremsausnehmung durch das arbeitsrichtungsseitige Längsende 24 der Führungsschiene 1 gebildet.

## Patentansprüche

1. Sägevorrichtung zum Schneiden von harten Materialien wie Beton, Gestein oder dergleichen, mit einer an einem zu bearbeitenden Untergrund (U) festlegbaren, länglichen mit einer Profilierung (18) versehenen Führungsschiene (1), einem in Längsrichtung (L) der Führungsschiene (1) versetzbaren Schlitten (2) und einer am Schlitten (2) angeordneten Sägeeinheit, **dadurch gekennzeichnet, dass** der Schlitten (2) eine Bremseinrichtung (5) aufweist, die an zumindest einer Stoppposition (25) entlang der Führungsschiene (1) eine Bewegung des Schlittens (2) gegenüber der Führungsschiene (1), zumindest in eine Arbeitsrichtung (A), verhindert.

2. Sägevorrichtung nach Anspruch 1, **dadurch gekennzeichnet, dass** in einer Stoppposition die Bremseinrichtung mit der Führungsschiene (1) in Verbindung bringbar ist.

3. Sägevorrichtung nach Anspruch 2, **dadurch gekennzeichnet, dass** in einer Stoppposition die Bremseinrichtung (5) mit der Profilierung (18) der Führungsschiene (1) in Eingriff bringbar ist.

4. Sägevorrichtung nach Anspruch 2 oder 3, **dadurch gekennzeichnet, dass** zur Verbindung mit der Führungsschiene (1) die Bremseinrichtung (5) mittels einer Steuereinheit (6) betätigbar ist.

5. Sägevorrichtung nach Anspruch 4, **dadurch gekennzeichnet, dass** die Steuereinheit (6) elektronisch betätigbar ist.

6. Sägevorrichtung nach Anspruch 4, **dadurch gekennzeichnet, dass** die Steuereinheit (6) mechanisch betätigbar ist.

7. Sägevorrichtung nach Anspruch 6, **dadurch gekennzeichnet, dass** die Steuereinheit (6) zu deren Betätigung eine, mit der Führungsschiene (1) zusammenwirkende Führungsfläche (9) aufweist.

8. Sägevorrichtung nach Anspruch 7, **dadurch gekennzeichnet, dass** die Bremseinrichtung (5) die Führungsfläche (9) und zumindest einen, mit der Profilierung (18) in Eingriff bringbaren, Rastvorsprung (23) aufweist.

9. Sägevorrichtung nach einem der Ansprüche 1 bis 8, **dadurch gekennzeichnet, dass** zumindest am arbeitsrichtungsseitigen Längsende (24) der Führungsschiene (1) eine Stoppposition angeordnet ist.

10. Sägevorrichtung nach einem der Ansprüche 1 bis 8, **dadurch gekennzeichnet, dass** an beiden Längsenden der Führungsschiene (1) jeweils eine Stoppposition angeordnet ist.
